# EUROPEAN PATENT APPLICATION

(11) **EP 4 535 633 A1**
(43) Date of publication of application: **09.04.2025**
(21) Application number: 23868325.4
(22) Date of filing: 27.06.2023
(51) Int. Cl.: H02M 1/00, H02M 3/335, H02M 3/158, H01F 27/30, G09G 3/36

(54) **ELECTRONIC DEVICE FOR PROVIDING MULTIPLE OUTPUTS, AND METHOD FOR MANUFACTURING SAME**

(30) Priority: 23.09.2022 KR 20220121008
(71) Applicant: Samsung Electronics Co., Ltd., Suwon-si, Gyeonggi-do 16677 (KR)
(72) Inventor: KIM, Keonwoo, Suwon-si Gyeonggi-do 16677 (KR); KIM, Moonyoung, Suwon-si Gyeonggi-do 16677 (KR); KANG, Jeongil, Suwon-si Gyeonggi-do 16677 (KR)
(74) Representative: Appleyard Lees IP LLP
(86) International application number: PCT/KR2023/008932
(87) International publication number: WO 2024/063265

(57) **Abstract**

This electronic device comprises: a converter including a first transformer including a primary winding and a secondary winding; a first rectifier connected to the secondary winding of the first transformer and including a diode; and a second transformer including a primary winding and a secondary winding, wherein the secondary winding of the first transformer is a single winding, and the primary winding of the second transformer may be connected to the secondary winding of the first transformer and the diode included in the first rectifier.

## Description

### [Technical Field]

Apparatuses and methods consistent with the disclosure relate to an electronic apparatus and a manufacturing method thereof, and more particularly, to an electronic apparatus for providing multi-output and a manufacturing method thereof.

### [Background Art]

Various electronic apparatuses have been developed in accordance with the development of electronic technology. In particular, a display apparatus such as a television (TV) has been slimmer in recent years.

As the display apparatus such as the TV is slimmer, a power conversion stage included in the display apparatus needs to have a smaller size.

In particular, the power conversion stage needs to have a lower height, and it is necessary to develop a technology for controlling multi-output of a transformer while lowering its height, which is one of the factors affecting the height of the power conversion stage.

### [Technical Solution]

Aspects of embodiments of the disclosure will be set forth in part in the description which follows and, in part, will be apparent from the description, or may be learned by practice of the presented embodiments.

According to an embodiment of the disclosure, an electronic apparatus including a converter including a first transformer, the first transformer including a primary-side winding and a secondary-side winding; a first rectifier connected to the secondary-side winding of the first transformer, and including a diode; and a second transformer including a primary-side winding and a secondary-side winding, wherein the secondary-side winding of the first transformer is a single winding, and the primary-side winding of the second transformer is connected to a node to which the secondary-side winding of the first transformer and the diode included in the first rectifier are connected.

According to an embodiment of the disclosure, the first transformer may be a reinforced insulation transformer, and the second transformer may be a basic insulation transformer.

According to an embodiment of the disclosure, the second transformer may be formed with an interleaved winding structure in which the primary-side winding and the secondary-side winding of the second transformer are alternately wound.

According to an embodiment of the disclosure, the first transformer may include a secondary-side first winding, and a secondary-side second winding, the diode of the first rectifier may include a first diode and a second diode, the first rectifier may include an output capacitor having a first end connected to a first end of the secondary-side first winding of the first transformer and a first end of the secondary-side second winding of the first transformer, the first diode may have a cathode connected to a second end of the secondary-side first winding of the first transformer and an anode connected to a second end of the output capacitor, the second diode may have a cathode connected to a second end of the secondary-side second winding of the first transformer and an anode connected to the second end of the output capacitor, and the primary-side winding of the second transformer may have a first end connected to the cathode of the first diode, and a second end connected to the cathode of the second diode.

According to an embodiment of the disclosure, the diode of the first rectifier may include a first diode, a second diode, a third diode, and a fourth diode, the first rectifier may include an output capacitor, the first diode may have a cathode connected to a first end of the output capacitor and an anode connected to a first end of the secondary-side winding of the first transformer, the second diode may have a cathode connected to the first end of the output capacitor and an anode connected to a second end of the secondary-side winding of the first transformer, the third diode may have a cathode connected to the first end of the secondary-side winding of the first transformer and an anode connected to the second end of the output capacitor, the fourth diode may have a cathode connected to the second end of the secondary-side winding of the first transformer and an anode connected to the second end of the output capacitor, and the primary-side winding of the second transformer may have a first end connected to the first end of the secondary-side winding of the first transformer, and the a second end connected to the second end of the secondary-side winding of the first transformer.

According to an embodiment of the disclosure, the first rectifier may include a first capacitor, a second capacitor, and an output capacitor, the diode of the first rectifier may include a first diode and a second diode, the first diode may have a cathode connected to a first end of the output capacitor and an anode connected to a first end of the secondary-side winding of the first transformer, the first capacitor may have a first end connected to the first end of the output capacitor and a second end connected to a second end of the secondary-side winding of the first transformer, the second diode may have a cathode connected to the first end of the secondary-side winding of the first transformer and an anode connected to a second end of the output capacitor, the second capacitor may have a first end connected to the second end of the secondary-side winding of the first transformer and a second end connected to the second end of the output capacitor, and the primary-side winding of the second transformer may have a first end connected to the first end of the secondary-side winding of the first transformer, and a second end connected to the second end of the secondary-side winding of the first transformer.

According to an embodiment of the disclosure, the electronic apparatus may further include a second rectifier connected to the secondary-side winding of the second transformer.

According to an embodiment of the disclosure, the electronic apparatus may further include a main board; a backlight driver; and a backlight, wherein the first rectifier may provide the main board with first output power, the second rectifier may provide the backlight driver and/or the backlight with second output power, and the first output power may be different from the second output power.

According to an embodiment of the disclosure, the second rectifier may include an output capacitor, a first diode having a cathode connected to a first end of the output capacitor and an anode connected to a first end of the secondary-side winding of the second transformer, a second diode having a cathode connected to the first end of the output capacitor and an anode connected to a second end of the secondary-side winding of the second transformer, a third diode having a cathode connected to the first end of the secondary-side winding of the second transformer and an anode connected to a second end of the output capacitor, and a fourth diode having a cathode connected to the second end of the secondary-side winding of the second transformer and an anode connected to the second end of the output capacitor.

According to an embodiment of the disclosure, the second rectifier may include a resonant capacitor disposed between a node to which the anode of the second diode and the cathode of the fourth diode are connected and the second end of the secondary-side winding of the second transformer.

According to an embodiment of the disclosure, the second transformer may have a smaller leakage inductance than the first transformer.

According to an embodiment of the disclosure, a manufacturing method of an electronic apparatus, the method including forming a converter including a first transformer having a primary-side-winding and a secondary-side winding; forming a first rectifier connected to a secondary-side winding of the first transformer, and including a diode; and forming a second transformer including a primary-side winding and a secondary-side winding, wherein the secondary-side winding of the first transformer is a single winding, and the primary-side winding of the second transformer is connected to a node to which the secondary-side winding of the first transformer and the diode included in the first rectifier are connected.

According to an embodiment of the disclosure, the first transformer may be a reinforced insulation transformer, and the second transformer may be a basic insulation transformer.

According to an embodiment of the disclosure, the second transformer may be formed with an interleaved winding structure in which the primary-side winding and the secondary-side winding of the second transformer are alternately wound.

According to an embodiment of the disclosure, the forming of the first transformer may include forming a secondary-side first winding and a secondary-side second winding, the diode of the first rectifier may include a first diode and a second diode, the forming of the first rectifier may include forming an output capacitor having a first end connected to a first end of a secondary-side first winding of the first transformer and a first end of a secondary-side second winding of the first transformer, forming the first diode to have a cathode connected to a second end of the secondary-side first winding of the first transformer and an anode connected to a second end of the output capacitor, and forming the second diode to have a cathode connected to the second end of the secondary-side second winding of the first transformer and an anode connected to the second end of the output capacitor, and in the forming of the second transformer, the primary-side winding of the second transformer may be formed to have a first end connected to the cathode of the first diode, and a second end connected to the cathode of the second diode.

### [Brief Description of Drawings]

These and/or other embodiments of the disclosure will become apparent and more readily appreciated from the following description of the embodiments, taken in conjunction with the accompanying drawings of which:
FIGS. 1A to 1D are views for explaining the height and performance of power conversion stages implemented in various forms.
FIG. 2 is a block diagram showing a configuration of an electronic apparatus according to one or more embodiments of the disclosure.
FIG. 3 is a view for explaining a circuit configuration of the electronic apparatus according to one or more embodiments of the disclosure.
FIG. 4 is a view showing a main operating waveform of the electronic apparatus according to one or more embodiments of the disclosure.
FIG. 5 is a view for explaining an effect of leakage inductance of a second transformer according to one or more embodiments of the disclosure.
FIG. 6 is a view for explaining a structure of the transformer based on whether a section bobbin is used according to one or more embodiments of the disclosure.
FIGS. 7 and 8 are views for explaining a structure of a first rectifier according to one or more embodiments of the disclosure.
FIG. 9 is a flowchart showing a manufacturing method of an electronic apparatus according to one or more embodiments of the disclosure.

### [Detailed Description]

The exemplary embodiments of the present disclosure may be diversely modified. Accordingly, specific exemplary embodiments are illustrated in the drawings and are described in detail in the detailed description. However, it is to be understood that the present disclosure is not limited to a specific exemplary embodiment, but includes all modifications, equivalents, and substitutions without departing from the scope and spirit of the present disclosure. Also, well-known functions or constructions are not described in detail since they would obscure the disclosure with unnecessary detail.

The disclosure provides an electronic apparatus for providing multi-output while lowering a height of a transformer, and a manufacturing method thereof.

Hereinafter, the disclosure is described in detail with reference to the accompanying drawings.

General terms that are currently widely used are selected as terms used in embodiments of the disclosure in consideration of their functions in the disclosure, and may be changed based on the intention of those skilled in the art or a judicial precedent, the emergence of a new technique, or the like. **In** addition, in a specific case, terms arbitrarily chosen by an applicant may exist. In this case, the meanings of such terms are mentioned in detail in corresponding descriptions of the disclosure. Therefore, the terms used in the embodiments of the disclosure need to be defined on the basis of the meanings of the terms and the contents throughout the disclosure rather than simple names of the terms.

In the disclosure, an expression "have", "may have", "include", "may include" or the like, indicates the existence of a corresponding feature (for example, a numerical value, a function, an operation or a component such as a part), and does not exclude the existence of an additional feature.

An expression, "at least one of A or/and B" may indicate either "A or B", or "both of A and B".

Expressions "first", "second", and the like, used in the disclosure may indicate various components regardless of the sequence or importance of the components. These expressions are used only to distinguish one component from another component, and do not limit the corresponding components.

A term of a singular number may include its plural number unless explicitly indicated otherwise in the context. It is to be understood that a term "include", "formed of", or the like used in the application specifies the presence of features, numerals, steps, operations, components, parts, or combinations thereof, mentioned in the specification, and does not preclude the presence or addition of one or more other features, numerals, steps, operations, components, parts, or combinations thereof.

In the specification, such a term as a "user" may refer to a person who uses the electronic apparatus or an apparatus (for example, an artificial intelligence electronic apparatus) which uses the electronic apparatus.

Hereinafter, various embodiments of the disclosure are described in detail with reference to the accompanying drawings.

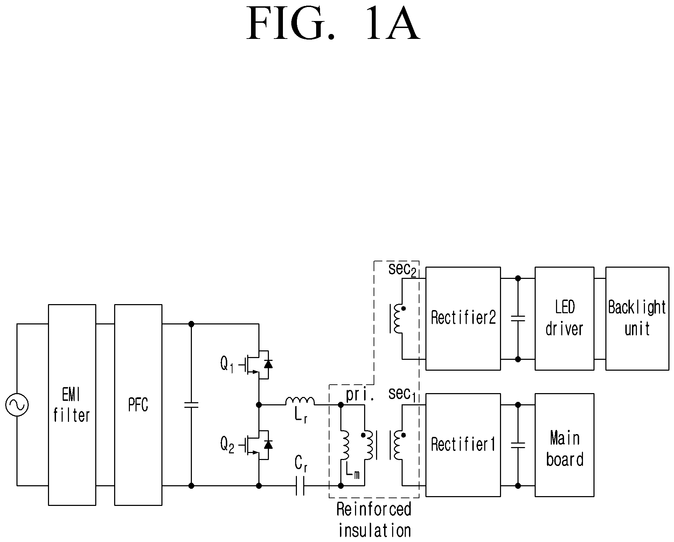

FIGS. 1A to 1D are views for explaining the height and performance of power conversion stages implemented in various forms.

It is necessary to lower the height of the power conversion stage as an electronic apparatus such as a television (TV) is recently slimmer. The height of the power conversion stage may generally be determined by a transformer included in the power conversion stage. The transformer requires reinforced insulation between its primary and secondary-side windings, and is thus unable to allow the primary and secondary-side windings to overlap each other and needs to use a section bobbin, which results in its higher height.

In order to solve such a height problem, the transformer may be formed by a printed circuit board (PCB) winding method using a multilayer board. However, the number of layers of a PCB may be increased to raise a price of the electronic apparatus in case that such a multi-winding structure is applied to obtain the multi-output. Alternatively, the transformer may be formed by manufacturing windings by using flat windings and utilizing a planar core structure. However, it is difficult to lower the height of the transformer because the stacked layers of the flat windings are increased.

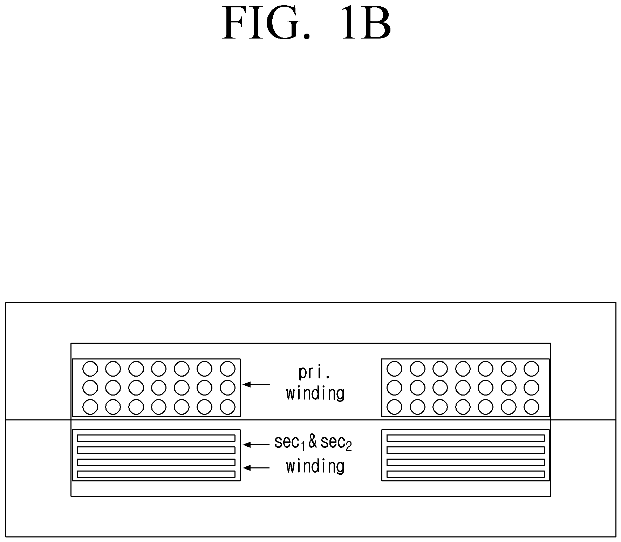

FIG. 1A is a view showing a circuit according to one or more embodiments in which a direct current (DC)-direct current (DC) converter of the power conversion stage controls the multi-output using a multi-winding transformer. In case that the multi-winding transformer is used, the number of primary-side switches, resonant tanks, and transformers may be reduced, which is advantageous in terms of the volume and price of the electronic apparatus. However, as shown in FIG. 1B, the height of the transformer may be increased due to the increased number of secondary-side windings of the transformer. Accordingly, it may be difficult to apply the transformer to a slim DC/DC converter.

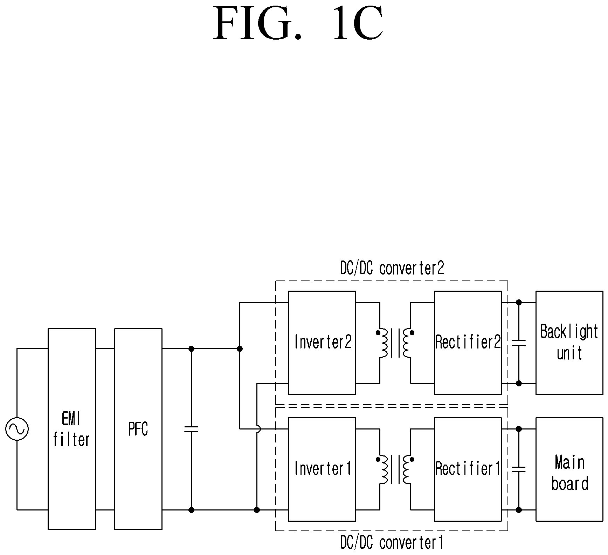

FIG. 1C is a view showing a circuit according to one or more embodiments in which the circuit controls the multi-output by using a single-winding transformer. In detail, this circuit uses a method of using two isolated DC/DC converters. However, the method further uses one more isolated converter, which is disadvantageous in terms of the volume and price of the electronic apparatus.

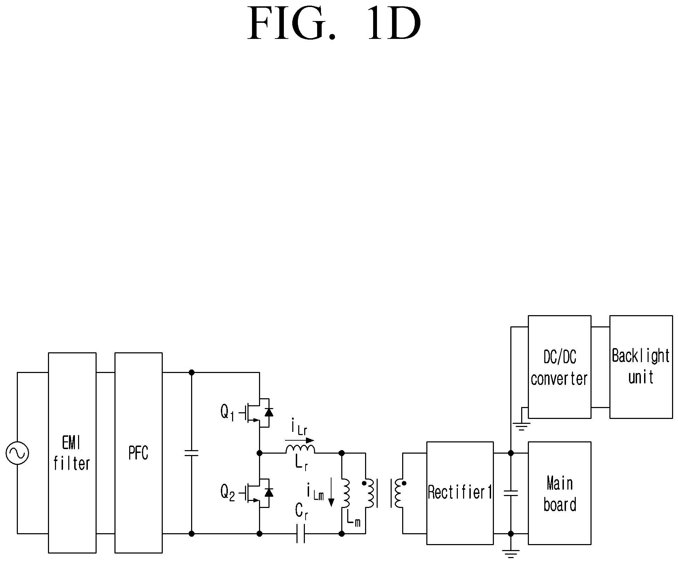

FIG. 1D is a view showing a circuit according to one or more embodiments in which the circuit controls the multi-output by using the single-winding transformer. In detail, this circuit uses a method of controlling each output by adding a separate DC/DC converter to an output stage. Here, the number of elements may be reduced compared to FIG. 1C. However, a voltage needs to be boosted to a high voltage for a backlight unit, which significantly reduces an efficiency in the case that the DC/DC converter is designed for this purpose.

Alternatively, the multi-winding transformer may be formed by lowering a height of a transformer core and widening its horizontal and vertical lengths. However, due to a technical limitation, it is difficult to manufacture the transformer core having the lower height and the wider horizontal and vertical lengths, and thus having a weak strength. Even after the implementation, the transformer may have very large leakage inductance of the windings, which results in a very poor cross regulation characteristic.

Hereinafter, the description describes a circuit which may control the multi-output more efficiently while using the single-winding transformer.

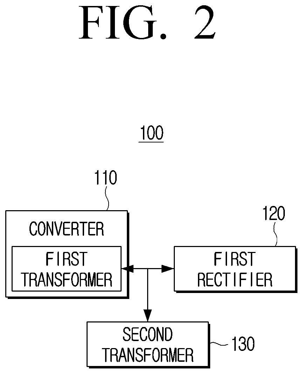

FIG. 2 is a block diagram showing a configuration of an electronic apparatus 100 according to one or more embodiments of the disclosure.

The electronic apparatus 100 is an apparatus that supplies power, and may be a component of a display apparatus such as a TV, a monitor, or a digital signage. However, the disclosure is not limited thereto, and the electronic apparatus 100 may be any apparatus as long as the apparatus supplies power. For example, the electronic apparatus 100 may be a component of an apparatus not equipped with a display.

As shown in FIG. 2, the electronic apparatus 100 may include a converter 110 including a first transformer, a first rectifier 120, and a second transformer 130.

The converter 110 may include the first transformer. Here, a secondary-side winding of the first transformer may be a single winding. The first transformer may have a single-winding structure, and the height of the transformer may be lower than in the case of the multi-winding structure. The first transformer may be a reinforced insulation transformer.

The first rectifier 120 may be connected to the secondary-side winding of the first transformer. The first rectifier 120 may be implemented as one of a center tap rectifier, a full-bridge rectifier, and a voltage doubler rectifier. However, the disclosure is not limited thereto, and the first rectifier may be implemented in various forms.

The second transformer 130 may have a primary-side winding connected to a node to which the secondary-side winding of the first transformer and a diode included in the first rectifier 120 are connected. Here, the second transformer 130 may be a basic insulation transformer that does not require the reinforced insulation because the second transformer is connected to a secondary-side of the first transformer. In addition, the second transformer 130 may not need to use a section bobbin, and may be a transformer having an interleaved winding structure in which the primary-side winding and secondary-side winding thereof are alternately wound. Accordingly, the second transformer 130 may have a lower height and lower leakage inductance. For example, the second transformer 130 may have smaller leakage inductance than the first transformer. Accordingly, the second transformer 130 may be less affected by the cross regulation problem of the output.

The first rectifier 120 may be implemented as the center tap rectifier. For example, the first rectifier 120 may include: an output capacitor having one end connected to one end of a secondary-side first winding of the first transformer and one end of a secondary-side second winding of the first transformer; a first diode having a cathode connected to the other end of the secondary-side first winding of the first transformer and an anode connected to the other end of the output capacitor; and a second diode having a cathode connected to the other end of the secondary-side second winding of the first transformer and an anode connected to the other end of the output capacitor. In this case, the primary-side winding of the second transformer 130 may have one end connected to the cathode of the first diode, and the other end connected to the cathode of the second diode.

The first rectifier 120 may be implemented as the full-bridge rectifier. For example, the first rectifier 120 may include: an output capacitor; a first diode having a cathode connected to one end of the output capacitor and an anode connected to one end of the secondary-side winding of the first transformer; a second diode having a cathode connected to one end of the output capacitor and an anode connected to the other end of the secondary-side winding of the first transformer; a third diode having a cathode connected to one end of the secondary-side winding of the first transformer and an anode connected to the other end of the output capacitor; and a fourth diode having a cathode connected to the other end of the secondary-side winding of the first transformer and an anode connected to the other end of the output capacitor. In this case, the primary-side winding of the second transformer 130 may have one end connected to one end of the secondary-side winding of the first transformer, and the other end connected to the other end of the secondary-side winding of the first transformer.

The first rectifier 120 may be implemented as the voltage doubler rectifier. For example, the first rectifier 120 may include: an output capacitor; a first diode having a cathode connected to one end of the output capacitor and an anode connected to one end of the secondary-side winding of the first transformer; a first capacitor having one end connected to one end of the output capacitor and the other end connected to the other end of the secondary-side winding of the first transformer; a second diode having a cathode connected to one end of the secondary-side winding of the first transformer and an anode connected to the other end of the output capacitor; and a second capacitor having one end connected to the other end of the secondary-side winding of the first transformer and the other end connected to the other end of the output capacitor. In this case, the primary-side winding of the second transformer 130 may have one end connected to one end of the secondary-side winding of the first transformer, and the other end connected to the other end of the secondary-side winding of the first transformer.

Meanwhile, the electronic apparatus 100 may further include a second rectifier connected to the secondary-side winding of the second transformer 130. For example, the second rectifier may include an output capacitor, a fifth diode having a cathode connected to one end of the output capacitor and an anode connected to one end of the secondary-side winding of the second transformer, a sixth diode having a cathode connected to one end of the output capacitor and an anode connected to the other end of the secondary-side winding of the second transformer, a seventh diode having a cathode connected to one end of the secondary-side winding of the second transformer and an anode connected to the other end of the output capacitor, and an eighth diode having a cathode connected to the other end of the secondary-side winding of the second transformer and an anode connected to the other end of the output capacitor.

Here, the second rectifier may further include a resonant capacitor disposed between a node to which the anode of the sixth diode and the cathode of the eighth diode are connected and the other end of the secondary-side winding of the second transformer 130. It is thus possible to prevent a reverse recovery phenomenon of the diode included in the second rectifier, which is described below with reference to the drawings.

The electronic apparatus 100 may further include: a main board; a backlight driver; and a backlight. In this case, the first rectifier 120 may provide the main board with first output power, the second rectifier may provide the backlight driver or the backlight with second output power, and the first output power may be different from the second output power.

In this way, the electronic apparatus 100 may provide the multi-output while being slimmer. In addition, the second transformer connected to the secondary-side of the first transformer may have the fewer number of turns by increasing a thickness of the core, and have smaller leakage inductance by using the interleaved winding method to thus improve a cross regulation characteristic.

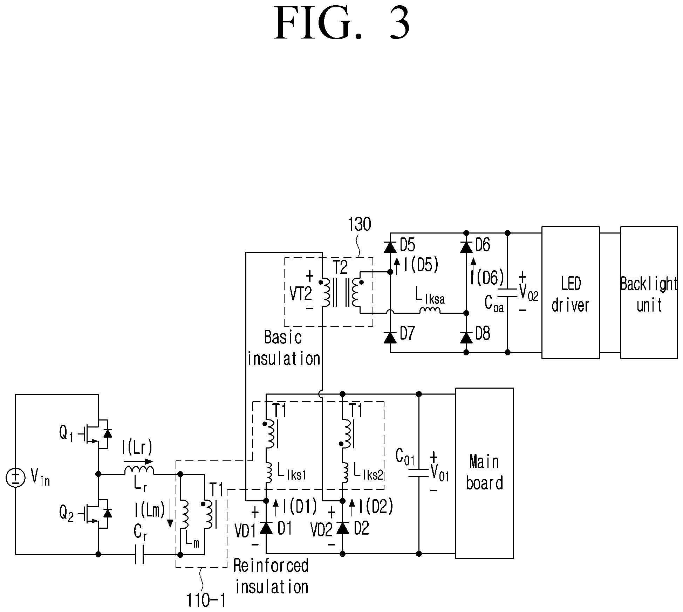

Hereinafter, the description describes an operation of the electronic apparatus 100 in more detail with reference to FIGS. 3 through 8. The description describes individual embodiments for convenience of description with reference to FIGS. 3 through 8. However, the individual embodiments described with reference to FIGS. 3 through 8 may be implemented in any combination thereof.

FIG. 3 is a view for explaining a circuit configuration of the electronic apparatus 100 according to one or more embodiments of the disclosure.

As shown in Figure 3, the electronic apparatus 100 may include the converter 110 including a first transformer T1 or 110-1, the first rectifier 120 connected to a secondary-side winding of the first transformer 110-1, and the second transformer T2 or 130 having the primary-side winding connected to a node to which the secondary-side winding of first transformer 110-1 and the diode included in the first rectifier 120 are connected.

Here, the first rectifier 120 may be implemented as the center tap rectifier. For example, the first rectifier 120 may include an output capacitor Co1 having one end connected to one end of a secondary-side first winding of the first transformer 110-1 and one end of a secondary-side second winding of the first transformer 110-1, a first diode D1 having a cathode connected to the other end of the secondary-side first winding of the first transformer 110-1 and an anode connected to the other end of the output capacitor, and a second diode D2 having a cathode connected to the other end of the secondary-side second winding of the first transformer 110-1 and an anode connected to the other end of the output capacitor. In this case, the primary-side winding of the second transformer 130 may have one end connected to the cathode of the first diode, and the other end connected to the cathode of the second diode.

The first transformer 110-1 may provide the main board with the first output power that passed through the first rectifier 120. The second transformer 130 may provide the backlight driver or the backlight with the second output power that passed through the second rectifier. Here, the second rectifier may include: an output capacitor Co2; a fifth diode D5 having a cathode connected to one end of the output capacitor and an anode connected to one end of the secondary-side winding of the second transformer; a sixth diode D6 having a cathode connected to one end of the output capacitor and an anode connected to the other end of the secondary-side winding of the second transformer; a seventh diode D7 having a cathode connected to one end of the secondary-side winding of the second transformer and an anode connected to the other end of the output capacitor; and an eighth diode D8 having a cathode connected to the other end of the secondary-side winding of the second transformer and an anode connected to the other end of the output capacitor.

The first transformer 110-1 may have a lower height because of the secondary-side implemented as the single winding. The second transformer 130 is a transformer disposed on the secondary-side of the first transformer 110-1, and may be implemented as the basic insulation transformer because the second transformer requires no reinforced insulation. In addition, the second transformer 130 requires no section bobbin, and thus may have the interleaved winding structure in which the primary-side winding and the secondary-side winding are alternately wound. Accordingly, the second transformer 130 may have the smaller leakage inductance, thus improving the cross regulation characteristic.

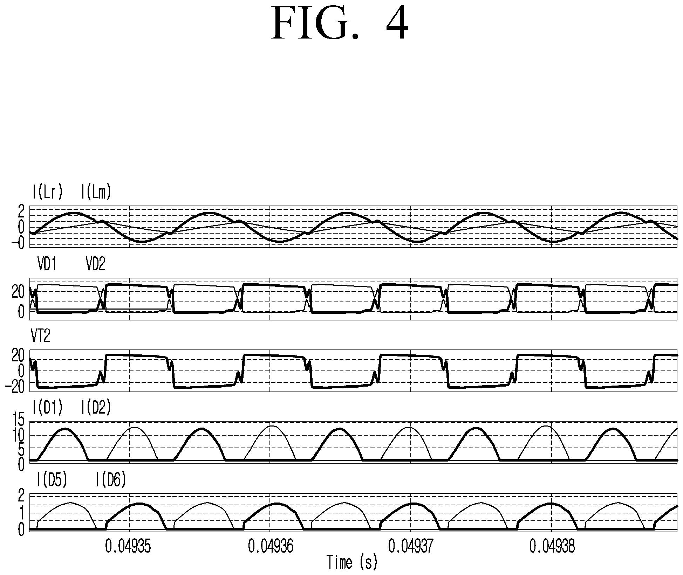

FIG. 4 is a view showing a main operating waveform of the electronic apparatus 100 according to one or more embodiments of the disclosure.

As shown in FIG. 4, a voltage VD1 across the first diode D1 and a voltage VD2 across the second diode D2, included in the first rectifier 120, may be complementary to each other based on a switching frequency and have a value between zero and 2Vo1. For example, VD1 and VD2 may be operated between zero and 26V in case that the first output power provided to the main board is 13V. Accordingly, VT2 may be operated between -26V and 26V based on the switching frequency.

The second output power may be Vo2=2×nT2×Vo1 in case that a turn ratio of the second transformer 130 is nT2. That is, a desired Vo2 may be acquired by adjusting nT2 regardless of Vo1.

I(D5) and I(D6) may reach zero slower than I(D1) and I(D2). In detail, in case of the first transformer 110-1, Cr, Lr and secondary-side leakage inductances Llks1 and Llks2 of first transformer 110-1 may affect resonance. However, in case of the second transformer 130, only secondary-side leakage inductance Llksa of the second transformer 130 may affect the resonance. Therefore, a resonance frequency may be lower to increase a resonance period, thus slowing down a speed at which I(D5) and I(D6) reach zero.

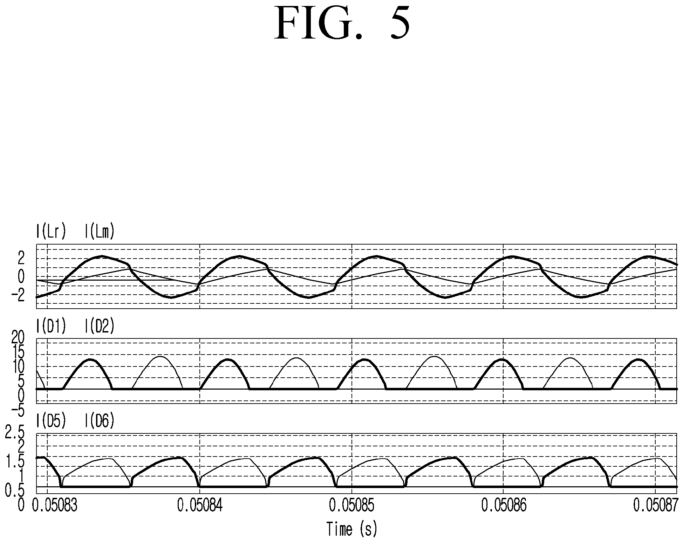

FIG. 5 is a view for explaining an effect of the leakage inductance of the second transformer 130 according to one or more embodiments of the disclosure.

As shown in FIG. 5, I(D5) and I(D6) may not reach zero before the primary-side switch is turned off in case that the secondary-side leakage inductance Llksa of the second transformer 130 is increased. Here, in case that the primary-side switch is turned off, I(D5) and I(D6) may be rapidly decreased to cause the reverse recovery phenomenon of the diode included in the second rectifier connected to the secondary-side of the second transformer 130, which may result in a loss.

To solve this problem, a capacitor Ca may be added in series to the secondary-side leakage inductance Llksa of the second transformer 130, which may lower a resonance capacitance to thus increase the resonance frequency. Accordingly, I(D5) and I(D6) may reach zero before the primary-side switch is turned off.

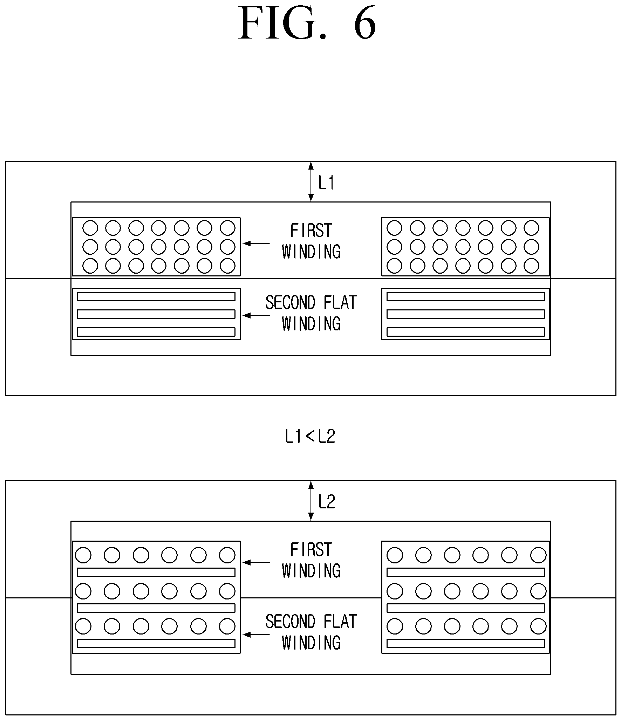

FIG. 6 is a view for explaining a structure of the transformer based on whether the section bobbin is used according to one or more embodiments of the disclosure.

The left side of FIG. 6 shows a transformer using the section bobbin because the transformer requires the reinforced insulation; and the right side of FIG. 6 shows a transformer using no section bobbin.

In case that the transformers are designed to have the same height, the transformer using no section bobbin may not use any bobbin structure for insulation between the primary-side and secondary-side, and thus have upper and lower layers of the core that is designed thicker (L1<L2). Accordingly, an area Ae in which a magnetic flux may flow in the transformer core may be increased. The maximum magnetic flux Bmax is inversely proportional to Ae and the number of turns. Therefore, the transformer may be designed to have the same Bmax with fewer turns as Ae is increased. In addition, the transformer requires no reinforced insulation, and may thus have the interleaved winding structure in which the primary-side winding and the secondary winding are alternately wound.

The second transformer 130 may have the smaller number of turns and the interleaved winding structure to thus have the lower leakage inductance.

The secondary-side leakage inductance may participate in the resonance to change a voltage gain of an LLC converter. Therefore, an output voltage may be changed based on a load and an input voltage change in case that the secondary-side leakage inductance is increased.

Vo2=2*nT2*Vo1 may remain constant regardless of load and input voltage conditions in case that the second transformer 130 ideally has the secondary-side leakage inductance of zero. However, as the secondary-side leakage inductance is increased, the cross regulation characteristic may be very poor to thus cause Vo2 to be significantly changed. In particular, the load on the second transformer 130 may be zero and the load on the first transformer 110-1 may be large. In this case, Vo2 may be greatly increased to increase voltage stresses of the diodes included in the second rectifier, which may require an additional dummy load circuit. The second transformer 130 according to the disclosure may have the smaller secondary-side leakage inductance to thus improve the cross regulation characteristic.

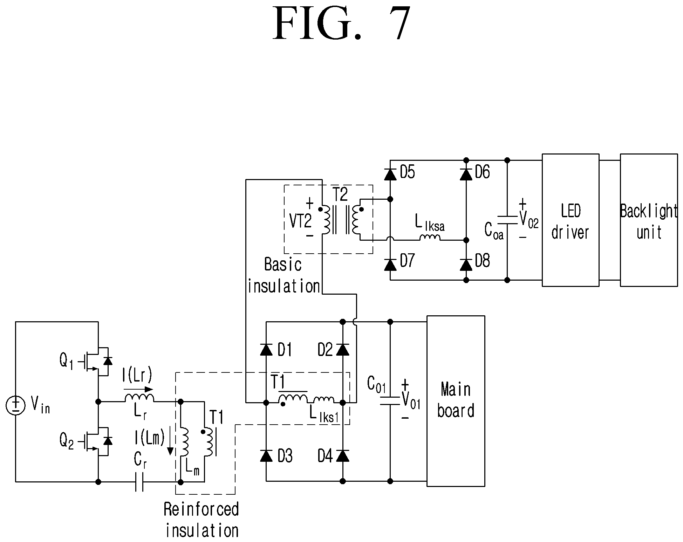

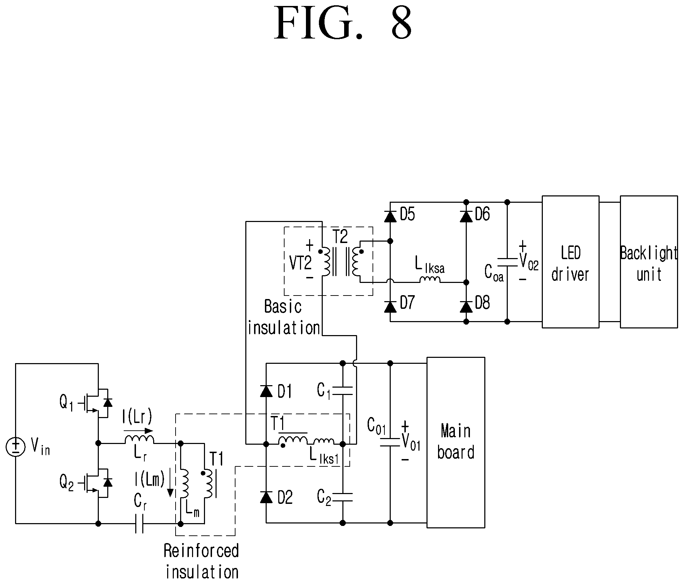

FIGS. 7 and 8 are views for explaining a structure of the first rectifier 120 according to one or more embodiments of the disclosure.

FIG. 3 assumes that the first rectifier 120 is the center tap rectifier for convenience of description. However, the first rectifier 120 may be implemented as the full-bridge rectifier or the voltage doubler rectifier.

For example, as shown in FIG. 7, the first rectifier 120 may be implemented as the full-bridge rectifier including an output capacitor, a first diode having a cathode connected to one end of the output capacitor and an anode connected to one end of the secondary-side winding of the first transformer, a second diode having a cathode connected to one end of the output capacitor and an anode connected to the other end of the secondary-side winding of the first transformer, a third diode having a cathode connected to one end of the secondary-side winding of the first transformer and an anode connected to the other end of the output capacitor, and a fourth diode having a cathode connected to the other end of the secondary-side winding of the first transformer and an anode connected to the other end of the output capacitor. **In** this case, VT2 may be operated between -Vo1 and Vo1.

Alternatively, as shown in FIG. 8, the first rectifier 120 may include an output capacitor, a first diode having a cathode connected to one end of the output capacitor and an anode connected to one end of the secondary-side winding of the first transformer, a first capacitor having one end connected to one end of the output capacitor and the other end connected to the other end of the secondary-side winding of the first transformer, a second diode having a cathode connected to one end of the secondary-side winding of the first transformer and an anode connected to the other end of the output capacitor, and a second capacitor having one end connected to the other end of the secondary-side winding of the first transformer and the other end connected to the other end of the output capacitor. In this case, VT2 may be operated between -0.5Vo1 and 0.5Vo1.

Meanwhile, FIGS. 3, 7, and 8 assume that the second rectifier is the full-bridge rectifier for convenience of description. However, the disclosure is not limited thereto. For example, the second rectifier may be implemented as the center tap rectifier or the voltage doubler rectifier.

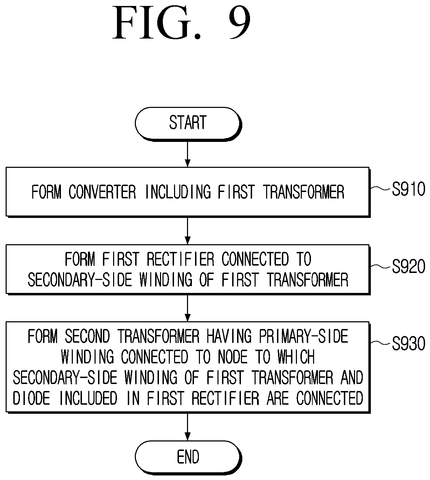

FIG. 9 is a flowchart showing a manufacturing method of an electronic apparatus according to one or more embodiments of the disclosure.

First, the method may include forming a converter including a first transformer (S910). In addition, the method may include forming a first rectifier connected to a secondary-side winding of the first transformer (S920). The method may include forming a second transformer having a primary-side winding connected to a node to which the secondary-side winding of the first transformer and a diode included in the first rectifier are connected (S930). Here, the secondary-side winding of the first transformer may be a single winding.

Here, the first transformer may be a reinforced insulation transformer, and the second transformer may be a basic insulation transformer.

In addition, the second transformer may be a transformer having an interleaved winding structure in which the primary-side winding and secondary-side winding thereof are alternately wound.

Meanwhile, the forming of the first rectifier (S920) may include: forming an output capacitor having one end connected to one end of a secondary-side first winding of the first transformer and one end of a secondary-side second winding of the first transformer; forming a first diode having a cathode connected to the other end of the secondary-side first winding of the first transformer and an anode connected to the other end of the output capacitor; and forming a second diode having a cathode connected to the other end of the secondary-side second winding of the first transformer and an anode connected to the other end of the output capacitor, and in the forming of the second transformer (S930), the primary-side winding of the second transformer may have one end connected to the cathode of the first diode, and the other end connected to the cathode of the second diode.

Alternatively, the forming of the first rectifier (S920) may include: forming an output capacitor; forming a first diode having a cathode connected to one end of the output capacitor and an anode connected to one end of the secondary-side winding of the first transformer; forming a second diode having a cathode connected to one end of the output capacitor and an anode connected to the other end of the secondary-side winding of the first transformer; forming a third diode having a cathode connected to one end of the secondary-side winding of the first transformer and an anode connected to the other end of the output capacitor; and forming a fourth diode having a cathode connected to the other end of the secondary-side winding of the first transformer and an anode connected to the other end of the output capacitor, and in the forming of the second transformer (S930), the primary-side winding may have one end connected to one end of the secondary-side winding of the first transformer, and the other end connected to the other end of the secondary-side winding of the first transformer.

Alternatively, the forming of the first rectifier (S920) may include: forming an output capacitor; forming a first diode having a cathode connected to one end of the output capacitor and an anode connected to one end of the secondary-side winding of the first transformer; forming a first capacitor having one end connected to one end of the output capacitor and the other end connected to the other end of the secondary-side winding of the first transformer; forming a second diode having a cathode connected to one end of the secondary-side winding of the first transformer and an anode connected to the other end of the output capacitor; and forming a second capacitor having one end connected to the other end of the secondary-side winding of the first transformer and the other end connected to the other end of the output capacitor, and in the forming of the second transformer (S930), the primary-side winding may have one end connected to one end of the secondary-side winding of the first transformer, and the other end connected to the secondary-side winding of the first transformer.

Meanwhile, the method may further include forming a second rectifier connected to the secondary-side winding of the second transformer.

Here, the method may further include forming a main board, forming a backlight driver, and forming a backlight. In this case, the first rectifier may provide the main board with first output power, the second rectifier may provide the backlight driver or the backlight with second output power, and the first output power may be different from the second output power.

In addition, the forming of the second rectifier may include: forming an output capacitor, forming a fifth diode having a cathode connected to one end of the output capacitor and an anode connected to one end of the secondary-side winding of the second transformer; a sixth diode having a cathode connected to one end of the output capacitor and an anode connected to the other end of the secondary-side winding of the second transformer; a seventh diode having a cathode connected to one end of the secondary-side winding of the second transformer and an anode connected to the other end of the output capacitor; and an eighth diode having a cathode connected to the other end of the secondary-side winding of the second transformer and an anode connected to the other end of the output capacitor.

Here, the forming of the second rectifier may further include forming a resonant capacitor disposed between a node to which the anode of the sixth diode and the cathode of the eighth diode are connected and the other end of the secondary-side winding of the second transformer.

Meanwhile, the second transformer may have smaller leakage inductance than the first transformer.

According to the various embodiments of the disclosure as described above, the electronic apparatus may provide the multi-output while being slimmer.

In addition, the second transformer connected to the secondary-side of the first transformer may have the fewer number of turns by increasing a thickness of the core, and have the smaller leakage inductance by using an interleaved winding method to thus improve a cross regulation characteristic.

Embodiments of the present disclosure may provide a manufacturing method of an electronic apparatus, the method including forming a converter including a first transformer; forming a first rectifier connected to a secondary-side winding of the first transformer; and forming a second transformer having a primary-side winding connected to a node to which the secondary-side winding of the first transformer and a diode included in the first rectifier are connected, wherein the secondary-side winding of the first transformer is a single winding.

The first transformer may be a reinforced insulation transformer, and the second transformer may be a basic insulation transformer.

The second transformer may be a transformer having an interleaved winding structure in which the primary-side winding and secondary-side winding thereof are alternately wound.

The forming of the first rectifier may include forming an output capacitor having one end connected to one end of a secondary-side first winding of the first transformer and one end of a secondary-side second winding of the first transformer; forming a first diode having a cathode connected to the other end of the secondary-side first winding of the first transformer and an anode connected to the other end of the output capacitor; and forming a second diode having a cathode connected to the other end of the secondary-side second winding of the first transformer and an anode connected to the other end of the output capacitor, and in the forming of the second transformer, the primary-side winding may have one end connected to the cathode of the first diode, and the other end connected to the cathode of the second diode.

The forming of the first rectifier may include forming an output capacitor; forming a first diode having a cathode connected to one end of the output capacitor and an anode connected to one end of the secondary-side winding of the first transformer; forming a second diode having a cathode connected to one end of the output capacitor and an anode connected to the other end of the secondary-side winding of the first transformer; forming a third diode having a cathode connected to one end of the secondary-side winding of the first transformer and an anode connected to the other end of the output capacitor; and forming a fourth diode having a cathode connected to the other end of the secondary-side winding of the first transformer and an anode connected to the other end of the output capacitor, and in the forming of the second transformer, the primary-side winding may have one end connected to one end of the secondary-side winding of the first transformer, and the other end connected to the other end of the secondary-side winding of the first transformer.

The forming of the first rectifier may include forming an output capacitor; forming a first diode having a cathode connected to one end of the output capacitor and an anode connected to one end of the secondary-side winding of the first transformer; forming a first capacitor having one end connected to one end of the output capacitor and the other end connected to the other end of the secondary-side winding of the first transformer; forming a second diode having a cathode connected to one end of the secondary-side winding of the first transformer and an anode connected to the other end of the output capacitor; and forming a second capacitor having one end connected to the other end of the secondary-side winding of the first transformer and the other end connected to the other end of the output capacitor, and in the forming of the second transformer, the primary-side winding may have one end connected to one end of the secondary-side winding of the first transformer, and the other end connected to the secondary-side winding of the first transformer.

The method may further include forming a second rectifier connected to the secondary-side winding of the second transformer.

The method may further include forming a main board, forming a backlight driver, and forming a backlight. In this case, the first rectifier may provide the main board with first output power, the second rectifier may provide the backlight driver or the backlight with second output power, and the first output power may be different from the second output power.

The forming of the second rectifier may include forming an output capacitor, forming a fifth diode having a cathode connected to one end of the output capacitor and an anode connected to one end of the secondary-side winding of the second transformer; a sixth diode having a cathode connected to one end of the output capacitor and an anode connected to the other end of the secondary-side winding of the second transformer; a seventh diode having a cathode connected to one end of the secondary-side winding of the second transformer and an anode connected to the other end of the output capacitor; and an eighth diode having a cathode connected to the other end of the secondary-side winding of the second transformer and an anode connected to the other end of the output capacitor.

The forming of the second rectifier may further include forming a resonant capacitor disposed between a node to which the anode of the sixth diode and the cathode of the eighth diode may be connected and the other end of the secondary-side winding of the second transformer.

The second transformer may have smaller leakage inductance than the first transformer.

Meanwhile, according to one or more embodiments of the disclosure, the various embodiments described above may be implemented by software including an instruction stored in a machine-readable storage medium (for example, a computer-readable storage medium). The machine may be an apparatus that invokes the stored instruction from the storage medium, may be operated based on the invoked instruction, and may include the electronic apparatus (e.g., electronic apparatus 100) according to the disclosed embodiments. In case that the instruction is executed by the processor, the processor may directly perform a function corresponding to the instruction or other components may perform the function corresponding to the instruction under control of the processor. The instruction may include codes provided or executed by a compiler or an interpreter. The machine-readable storage medium may be provided in the form of a non-transitory storage medium. Here, the term "non-transitory" indicates that the storage medium is tangible without including a signal, and does not distinguish whether data are semi-permanently or temporarily stored in the storage medium.

In addition, according to one or more embodiments of the disclosure, the methods according to the various embodiments described above may be included and provided in a computer program product. The computer program product may be traded as a product between a seller and a purchaser. The computer program product may be distributed in a form of the machine-readable storage medium (for example, a compact disc read only memory (CD-ROM)) or online through an application store (for example, PlayStore^{™}). In case of the online distribution, at least a part of the computer program product may be at least temporarily stored or temporarily provided in a storage medium such as a memory of a server of a manufacturer, a server of an application store or a relay server.

In addition, according to one or more embodiments of the disclosure, the various embodiments described above may be implemented in a computer or a computer-readable recording medium using software, hardware, or a combination of software and hardware. In some cases, the embodiments described in the specification may be implemented by a processor itself. According to software implementation, the embodiments such as the procedures and functions described in the specification may be implemented by separate software modules. Each of the software modules may perform one or more functions and operations described in the specification.

Meanwhile, computer instructions for performing processing operations of the machines according to the various embodiment of the disclosure described above may be stored in a non-transitory computer-readable medium. The computer instructions stored in the non-transitory computer-readable medium allow a specific machine to perform the processing operations in the machine according to the various embodiments described above in case that the instructions are executed by a processor of the specific machine. The non-transitory computer-readable medium is not a medium that stores data therein for a while, such as a register, a cache, or a memory, and indicates a medium that semi-permanently stores data therein and is readable by the machine. A specific example of the non-transitory computer-readable medium may include a compact disk (CD), a digital versatile disk (DVD), a hard disk, a Blu-ray disk, a universal serial bus (USB), a memory card, a read-only memory (ROM), or the like.

In addition, each of the components (for example, modules or programs) according to the various embodiments described above may include a single entity or a plurality of entities, and some of the corresponding sub-components described above may be omitted or other sub-components may be further included in the various embodiments. Alternatively or additionally, some of the components (for example, the modules or the programs) may be integrated into one entity, and may perform functions performed by the respective corresponding components before being integrated in the same or similar manner. Operations performed by the modules, the programs or other components according to the various embodiments may be executed in a sequential manner, a parallel manner, an iterative manner or a heuristic manner, and at least some of the operations may be performed in a different order or be omitted, or other operations may be added.

Although the embodiments of the disclosure have been shown and described hereinabove, the disclosure is not limited to the abovementioned specific embodiments, and may be variously modified by those skilled in the art to which the disclosure pertains without departing from the scope and spirit of the disclosure as disclosed in the accompanying claims. These modifications should also be understood to fall within the scope and spirit of the disclosure.

## Claims

1. An electronic apparatus comprising:
a converter including a first transformer, the first transformer including a primary-side winding and a secondary-side winding;
a first rectifier connected to the secondary-side winding of the first transformer, and including a diode; and
a second transformer including a primary-side winding and a secondary-side winding,
wherein the secondary-side winding of the first transformer is a single winding, and
the primary-side winding of the second transformer is connected to a node to which the secondary-side winding of the first transformer and the diode included in the first rectifier are connected.

2. The electronic apparatus as claimed in claim 1, wherein
the first transformer is a reinforced insulation transformer, and
the second transformer is a basic insulation transformer.

3. The electronic apparatus as claimed in claim 2, wherein
the second transformer is formed with an interleaved winding structure in which the primary-side winding and the secondary-side winding of the second transformer are alternately wound.

4. The electronic apparatus as claimed in claim 1, wherein
the first transformer includes:
a secondary-side first winding, and
a secondary-side second winding,
the diode of the first rectifier includes a first diode and a second diode,
the first rectifier includes:
an output capacitor having a first end connected to a first end of the secondary-side first winding of the first transformer and a first end of the secondary-side second winding of the first transformer,
the first diode has a cathode connected to a second end of the secondary-side first winding of the first transformer and an anode connected to a second end of the output capacitor,
the second diode has a cathode connected to a second end of the secondary-side second winding of the first transformer and an anode connected to the second end of the output capacitor, and
the primary-side winding of the second transformer has a first end connected to the cathode of the first diode, and a second end connected to the cathode of the second diode.

5. The electronic apparatus as claimed in claim 1, wherein
the diode of the first rectifier includes a first diode, a second diode, a third diode, and a fourth diode,
the first rectifier includes an output capacitor,
the first diode has a cathode connected to a first end of the output capacitor and an anode connected to a first end of the secondary-side winding of the first transformer,
the second diode has a cathode connected to the first end of the output capacitor and an anode connected to a second end of the secondary-side winding of the first transformer,
the third diode has a cathode connected to the first end of the secondary-side winding of the first transformer and an anode connected to the second end of the output capacitor,
the fourth diode has a cathode connected to the second end of the secondary-side winding of the first transformer and an anode connected to the second end of the output capacitor, and
the primary-side winding of the second transformer has a first end connected to the first end of the secondary-side winding of the first transformer, and the a second end connected to the second end of the secondary-side winding of the first transformer.

6. The electronic apparatus as claimed in claim 1, wherein
the first rectifier includes a first capacitor, a second capacitor, and an output capacitor,
the diode of the first rectifier includes a first diode and a second diode,
the first diode has a cathode connected to a first end of the output capacitor and an anode connected to a first end of the secondary-side winding of the first transformer,
the first capacitor has a first end connected to the first end of the output capacitor and a second end connected to a second end of the secondary-side winding of the first transformer,
the second diode has a cathode connected to the first end of the secondary-side winding of the first transformer and an anode connected to a second end of the output capacitor,
the second capacitor has a first end connected to the second end of the secondary-side winding of the first transformer and a second end connected to the second end of the output capacitor, and
the primary-side winding of the second transformer has a first end connected to the first end of the secondary-side winding of the first transformer, and a second end connected to the second end of the secondary-side winding of the first transformer.

7. The electronic apparatus as claimed in claim 1, further comprising:
a second rectifier connected to the secondary-side winding of the second transformer.

8. The electronic apparatus as claimed in claim 7, further comprising:
a main board;
a backlight driver; and
a backlight,
wherein the first rectifier provides the main board with first output power,
the second rectifier provides the backlight driver and/or the backlight with second output power, and
the first output power is different from the second output power.

9. The electronic apparatus as claimed in claim 7, wherein
the second rectifier includes:
an output capacitor,
a first diode having a cathode connected to a first end of the output capacitor and an anode connected to a first end of the secondary-side winding of the second transformer,
a second diode having a cathode connected to the first end of the output capacitor and an anode connected to a second end end of the secondary-side winding of the second transformer,
a third diode having a cathode connected to the first end of the secondary-side winding of the second transformer and an anode connected to a second end of the output capacitor, and
a fourth diode having a cathode connected to the second end of the secondary-side winding of the second transformer and an anode connected to the second end of the output capacitor.

10. The electronic apparatus as claimed in claim 9, wherein
the second rectifier includes:
a resonant capacitor disposed between a node to which the anode of the second diode and the cathode of the fourth diode are connected and the second end of the secondary-side winding of the second transformer.

11. The electronic apparatus as claimed in claim 1, wherein
the second transformer has a smaller leakage inductance than the first transformer.

12. A manufacturing method of an electronic apparatus, the method comprising:
forming a converter including a first transformer having a primary-side-winding and a secondary-side winding;
forming a first rectifier connected to a secondary-side winding of the first transformer, and including a diode; and
forming a second transformer including a primary-side winding and a secondary-side winding,
wherein the secondary-side winding of the first transformer is a single winding, and
the primary-side winding of the second transformer is connected to a node to which the secondary-side winding of the first transformer and the diode included in the first rectifier are connected.

13. The method as claimed in claim 12, wherein
the first transformer is a reinforced insulation transformer, and
the second transformer is a basic insulation transformer.

14. The method as claimed in claim 13, wherein
the second transformer is formed with an interleaved winding structure in which the primary-side winding and the secondary-side winding of the second transformer are alternately wound.

15. The method as claimed in claim 12, wherein
the forming of the first transformer includes forming a secondary-side first winding and a secondary-side second winding,
the diode of the first rectifier includes a first diode and a second diode,
the forming of the first rectifier includes:
forming an output capacitor having a first end connected to a first end of a secondary-side first winding of the first transformer and a first end of a secondary-side second winding of the first transformer,
forming the first diode to have a cathode connected to a second end of the secondary-side first winding of the first transformer and an anode connected to a second end of the output capacitor, and
forming the second diode to have a cathode connected to the second end of the secondary-side second winding of the first transformer and an anode connected to the second end of the output capacitor, and
in the forming of the second transformer, the primary-side winding of the second transformer is formed to have a first end connected to the cathode of the first diode, and a second end connected to the cathode of the second diode.
